(19) **Europäisches Patentamt**
**European Patent Office**
**Office européen des brevets**

(11) **EP 2 321 083 B1**

(12) **EUROPEAN PATENT SPECIFICATION**

(45) Date of publication and mention
of the grant of the patent:
**31.01.2018 Bulletin 2018/05**

(51) Int Cl.:
***B23H 1/02*** *(2006.01)*     ***B23H 9/04*** *(2006.01)*

(21) Application number: **09784826.1**

(22) Date of filing: **30.07.2009**

(86) International application number:
**PCT/GB2009/001877**

(87) International publication number:
**WO 2010/015806 (11.02.2010 Gazette 2010/06)**

(54) **METHOD AND APPARATUS FOR IMPROVING ROLL TEXTURING USING ELECTRICAL DISCHARGE MACHINES**

VERFAHREN UND VORRICHTUNG ZUR VERBESSERUNG VON WALZENTEXTURIERUNG UNTER VERWENDUNG VON FUNKENEROSIONSMASCHINEN

PROCÉDÉ ET APPAREIL POUR AMÉLIORER LA TEXTURISATION PAR ROULEAU À L'AIDE DE MACHINES À DÉCHARGE ÉLECTRIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.08.2008 GB 0814218**

(43) Date of publication of application:
**18.05.2011 Bulletin 2011/20**

(73) Proprietor: **Sarclad Limited**
**Chesterfield S41 9RT (GB)**

(72) Inventor: **WYBROW, Mark**
**Chesterfield S41 9RT (GB)**

(74) Representative: **Fry, David John et al**
**Agile IP LLP**
**Airport House**
**Purley Way**
**Croydon**
**Surrey CRO 0XZ (GB)**

(56) References cited:
**EP-A1- 0 371 962**     **EP-A2- 0 076 150**
**US-A- 5 689 427**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to methods and apparatus for spark monitoring and modification using an electrical discharge technique (EDT) for machining or applying a finish to a surface of a workpiece. An EDT technique is used for applying a textured or matt finish to the surface of a work roll. The work roll is used in the rolling of metallic products to produce on the rolled products a complementary textured or matt finish. The present invention relates specifically to EDT machines which make use of a multiple electrode array wherein the electrodes are attached to a single servo-motor.

Existing discharge techniques for texturing the surface of an object such as a work roll, otherwise referred to as a mill roll, are discussed in the Applicant's earlier European Patent Numbers EP0294082, EP0304235, and EP0373154, and in European Patent No. EP0371962. EP0371962 discloses in combination the features of the preamble of claim 1 and of claim 8. As described in EP0304235 and EP0371962, electrical discharge apparatus commonly comprises a head with an array of electrodes supported within a block of insulating material, such that each electrode is electrically insulated from its neighbours. The head is moveable, for example by a servo-motor, towards and away from the work roll and is supported by a housing. The housing comprises electrical connections for coupling each electrode to an individual source of pulsed direct current.

In use, the electrodes disclosed in EP0304235 protrude into a bath of dielectric fluid in which the surface of the work roll is also immersed. An electric pulse is applied to cause the dielectric fluid to break down so that electricity flows between the electrode head and the work roll surface creating a spark. A spark causes the surface temperature of the roll to rise rapidly and a small area on the roll surface will melt producing a minute crater. Repetition of this process produces a large number of craters, which form the desired roll texture.

The texturing process is controlled by changing the distance of the gap between the electrodes and the roll surface using a servo-motor control unit. The gap is reduced until the break-down voltage of the dielectric fluid is reached and sparks flow between the electrode/s and the roll surface.

For an electrical discharge apparatus to be efficient it is necessary that as many sparks as possible are created within a given period of time for a given number of applied pulses. However, it has been found that, even when the gap between the electrode and the roll surface is controlled, sparks do not always occur when a pulse is applied. If a spark does not occur, no work is performed on the work roll and the efficiency of the system is reduced.

It is known to quantify a measure of the efficiency of an electrical discharge apparatus by using a current transducer and measuring the amount of current that flows. However, this method is slow and only gives an approximation of the actual efficiency. Furthermore, it does not provide information about the efficiency of individual electrodes within an array.

It is important to monitor the efficiency of each electrode in an array because when multiple electrodes are controlled by a single servo-motor control unit it has been found that often one electrode begins to work much harder than its neighbours. The initiation of this increased output to a "dominant" electrode is random and can continue for some time before it will naturally fade out. This can lead to an irregular texture being formed on the work roll surface; a lack of efficiency until the electrode eventually fades out; and it can contribute to failure of the pulse-generating electronics connected to the electrodes.

Furthermore, efficiency monitoring is useful to detect other irregularities in EDT machine operation. It has been found that, during normal application of pulsed power to an electrode array in an EDT machine, if the mean voltage between the electrodes and the work roll surface during the sparking period is too low, arcing occurs. That is, when the spark created by the pulse of power continues beyond the "on-time" of the pulse, arcing occurs. Arcing damages the surface of the work roll, and as a result the work roll cannot be used in a mill. The work roll has to be re-ground and re-textured. This is both costly and time-consuming.

There are further reasons why EDT machines, which use multiple electrodes on a single servo-motor, have been found to produce uneven texturing across the length of a roll. As an electrode array moves along the length of a work roll it has been found that in the middle of its path every electrode contributes to the texturing of the roll, because each electrode in the texturing head passes every point along the length. However, when the electrode array is at the end of the work roll the texturing head is brought to a stop and not all of the electrodes will pass the end of the work roll. Only the electrode which is nearest to the end of the work roll will contribute to texturing at the end point, with the result that the texturing effect is reduced at the end of the work roll. This is an undesirable effect because use of the work roll in a mill requires an even texturing pattern across the work roll surface.

The present invention sets out to provide methods and devices for improving roll texturing using electrical discharge machines, which alleviates the problems described above by controlling the output of a multiple electrode array to produce a more uniform texturing effect.

In one aspect, the invention provides a control method for an electrical discharge apparatus as claimed in claim 1 hereof.

The step of of monitoring voltage parameters comprises counting the number of voltage pulses applied; counting the number of voltage pulses applied to each electrode which drop to below a threshold voltage; calculating the proportion of voltage pulses applied to each electrode which drop to below the threshold voltage to the number of voltage pulses applied to yield an efficiency measurement for each electrode; and outputting the efficiency measurement or each electrode.

By measuring the sparking efficiency, a user is given accurate feedback about the EDT machine's performance, which allows adjustments to be made to optimise the capability of the machine.

It is envisaged that the efficiency measurement method can be automated to allow direct feedback to be inputted into the operational parameters of the machine whereby automatic adjustments are made in response to the efficiency input. This will allow a user to prevent arcing and also achieve an evenly textured pattern across the work roll surface at maximum efficiency.

Preferably, the step of adjusting the voltage pulses applied to each electrode comprises reducing the power applied for a set period of time.

Preferably, the step of adjusting the voltage pulses applied to each electrode comprises stopping the power applied for a set period of time.

Preferably, the step of adjusting the voltage pulses applied to each electrode comprises reducing the number of electrical pulses applied to each electrode (the frequency) for a set period of time.

In a second aspect, the present invention provides a control device for an electrical discharge apparatus as set out in claim 8 appended hereto. The monitoring means comprises a first counting means for counting the number of voltage pulses applied to each of the electrodes in the array over a predetermined time period; a second counting means for counting the number of voltage pulses applied to each electrode in which the voltage drops below a threshold voltage; a calculating means for calculating the proportion of voltage pulses applied to each of the electrodes in the array of which the voltage drops below the threshold voltage to the number of voltage pulses applied to yield an electrode efficiency measurement for each electrode; an output for outputting an efficiency measurement for each electrode; and the adjusting means is for adjusting the voltage pulses applied to each electrode according to the efficiency measurement output for the or each electrode.

Within the context of this specification the word "comprises" is taken to mean "includes, among other things". It is not intended to be construed as "consists of only".

For the purposes of clarity and a concise description, features are described herein as part of the same or separate embodiments; however it will be appreciated that the invention may include embodiments having combinations of all or some of the features described as long as these embodiments are within the scope of the claims.

The invention will now be described by way of example with reference to the accompanying diagrammatic drawings, in which:-

Figure 1 is a voltage profile to illustrate a method of measuring sparking efficiency in accordance with the present invention;

Figure 2 is a schematic view of apparatus for measurement of sparking efficiency in accordance with the present invention;

Figure 3 shows voltage profiles during normal texturing and during pulse suppression in accordance with a second embodiment of the present invention;

Figure 4 shows voltage profiles during normal texturing, during arcing and during pulse suppression in accordance with a second aspect of the second embodiment of the present invention;

Figure 5a is a plan view of an EDT machine in accordance with a third embodiment of the present invention;

Figure 5b shows voltage profiles for pulses applied to the first and second electrode of the embodiment of Figure 5a at position A; and

Figure 5c shows voltage profiles for pulses applied to the first and second electrode of the embodiment of Figure 5a at position B.

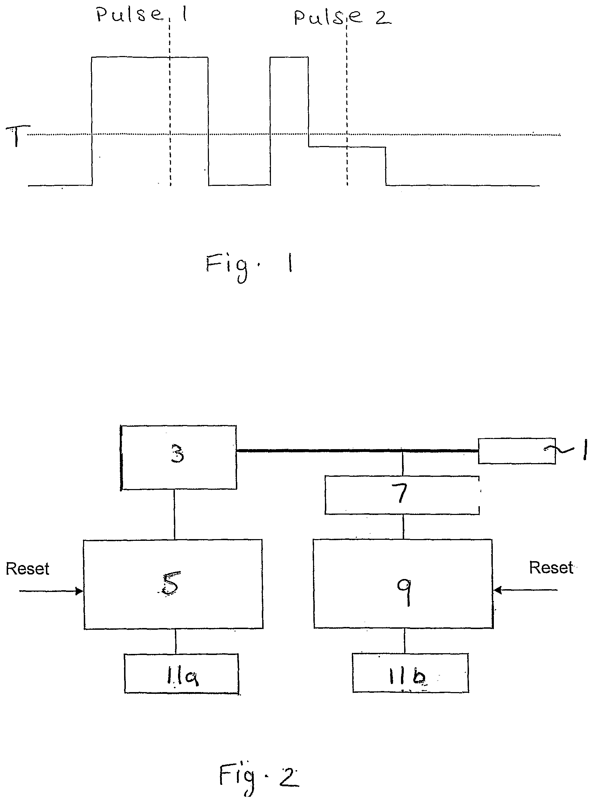

Figure 1 is the voltage profile used in the method of measuring sparking efficiency. The apparatus to measure sparking efficiency of an electrode 1 comprises a pulse generator 3 connected to the electrode 1 to generate a pulse 1, as shown in Figure 1. The pulse generator is connected to a pulse counter 5 with an output 11a. The electrode 1 is connected to a spark detector 7, which is configured to detect a spark with the voltage profile shown in pulse 2 of Figure 1. The spark detector 7 is connected to a spark counter 9 with an output 11b.

In use, over a set period of time a number of voltage pulses are applied to the electrode 1 by the pulse generator 3. The number of "on periods" of each pulse is counted using the pulse counter 5. The spark detector 7 detects when a pulse results in a spark from the electrode 1. The number of sparks detected is counted by counter 9 and output.

As shown with reference to Figure 1-pulse 1, when no spark has been created the voltage remains constant for the whole sampling period. However, as shown by pulse 2, when a spark has occurred the voltage drops from the maximum level to an intermediate level after a short period of time. A threshold T is set, below which a spark is considered to have occurred, and below this voltage value the spark detector registers a spark. Each spark detected is counted by spark counter 9. The pulse generated has a voltage of at least 100 Volts. When a spark has occurred the voltage drops to around 20 Volts. The sparking threshold at which the spark detector 7 detects a spark is in the region of 30 to 40 Volts.

In use, after 1 second, the values of the pulse counters 5 and the spark counter 9 are output to outputs 11a and 11b. The counters 5, 9 are reset. To measure the operating efficiency over the set measurement period, the ratio of the number of pulses applied to the electrode 1 (output 11a) to the number of actual sparks (output 11b) is calculated. The proportion of those pulses which result in a spark determines the efficiency of the electrode 1.

$$\text{Efficiency (\%)} = (\text{total number sparks detected/total number pulses applied}) \times 100$$

The efficiency value obtained for each electrode in an array can be used to derive an average efficiency over the multiple electrode array. The efficiency values can be recorded. Also, the measure of electrode array performance is used to feedback and adjusts the input to at least one electrode in the array to improve uniformity of output across the array. Furthermore, the electrode efficiency value can be used to feedback and adjust the servo-motor position.

For an array of two or more electrodes an efficiency value greater than or equal to 90% would be considered to indicate that the array has a good efficiency. For example, the efficiency value for each electrode can be used to detect dominance of one electrode over the further electrodes in an array. The sparking level threshold value T is set as discussed above by the control device (not shown). If the number of sparks created and so the efficiency of a single electrode is found to be greater than its neighbours, this indicates that the electrode is dominant. To determine dominance, the control device compares the two highest electrode efficiency values or the highest efficiency value with the mean efficiency value of the remaining electrodes. If the difference between these two efficiency values is greater than a predetermined "dominance threshold", then the control device detects that the electrode with the highest efficiency is dominant.

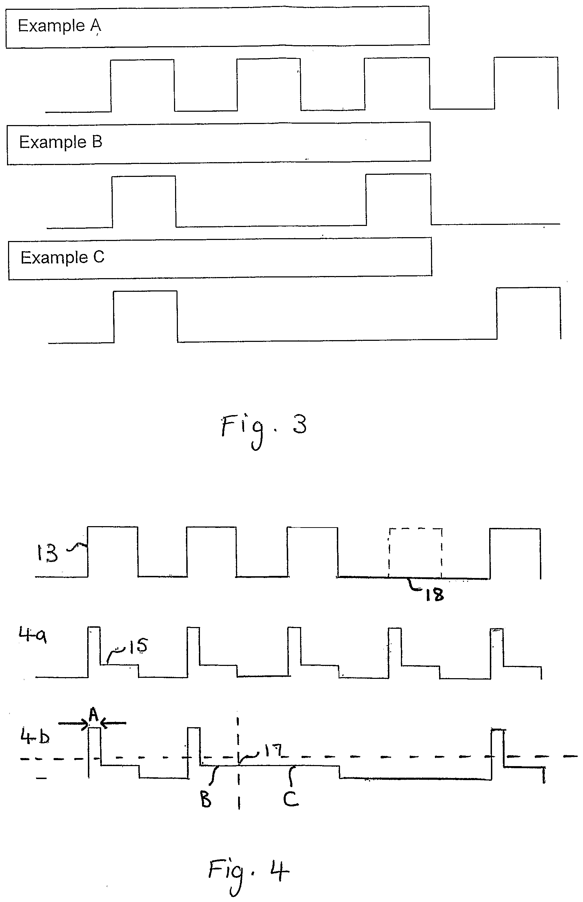

Referring to Figure 3, Example A shows a pulse train during normal texturing. On determining that an individual electrode is dominant, the control device reacts by adjusting the power applied to that electrode. The power is cut off and/or the power supplied is suppressed. For example, on detecting dominance, power to the dominant electrode is cut for a period of about 1 second before suppressing the work rate, as described below, for a longer period of about 5 seconds.

The voltage or the number of pulses applied to the dominant electrode is reduced by the control device. As shown in Example B, every second pulse is not passed to the dominant electrode, which leads to a 50% reduction in the work rate of that electrode. As shown in Example C, only every third pulse is passed to the dominant electrode, which leads to a 66% reduction in the work rate of that electrode. The suppression of the dominant electrode is maintained for a period of time after which the control device restores the pulse.

The same method, described above, to suppress a dominant electrode can also be used to correct for arcing, when the voltage between an electrode/s and the roll surface falls too quickly, or is below a threshold for normal machining or if the spark continues beyond the "on-time" of the power pulse that generated the spark. By way of example, an electrode array of 72 electrodes is used to texture a roll. The electrodes are carried by 4 servo-motors with 18 electrodes per servo-motor. The "on-time" of the power pulse is in the region of 25 microseconds and the "off-time" between pulses is in the region of 30 microseconds. Texturing of the work roll surface takes in the region of 30 minutes. In altenative embodiments, the operation of the pulse can be over an "on-time" of between about 10 to 400 microseconds and an "off time" of between about 15 and 450 microseconds.

As shown in Figure 4a, during normal texturing every applied pulse results in a spark 15. The voltage output of each electrode is continuously monitored. Arc detection can be effected using various methods and these methods can also be subject to additional conditioning to ensure accurate detection. Referring to Figure 4b, an arc can be detected if the peak marked A is too fast, if the pulse at point B is below a critical threshold ( shown by the dotted line) and if the pulse continues into the "off time", as shown at point C. As also shown in Figure 4b, when an arc is detected, the control device suppresses power (shown in solid line) to the arcing electrode to prevent arcing continuing. Additionally, when the control device detects arcing, the servo-motor may be operated to move the electrodes away from the roll surface. The control device suppresses power either for a fixed period of time or for a period of time during which the servo-motor stops moving the electrode head forwards and begins to move it backwards. This period is typically in the region of 20 milliseconds. When power pulses are resumed a "normal" spark pattern is generated.

In a similar way to the method for suppression of a dominant electrode, which is discussed above, the spark pattern can be modified in relation to the texturing head's position along the length of a work roll surface. For example, this is used to suppress spark generation at the end of a work roll to prevent an uneven texturing effect.

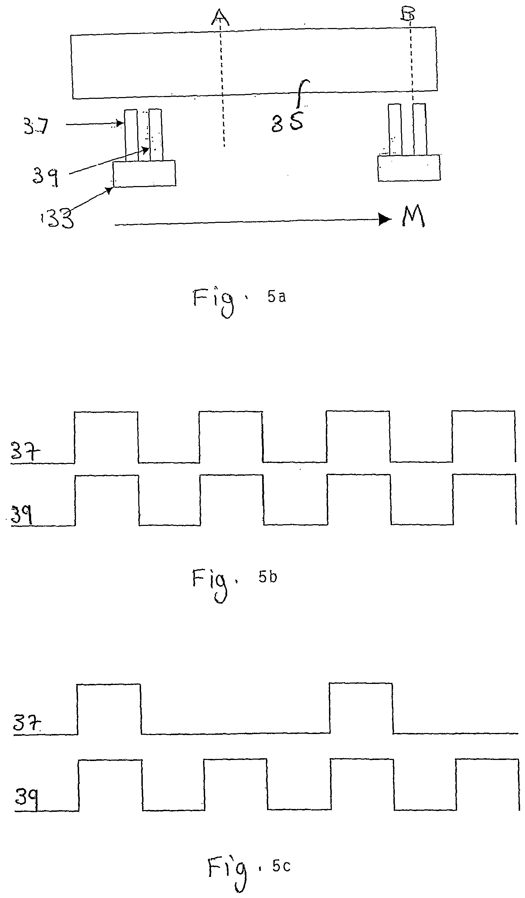

As shown in Figure 5a, the texturing head 33 comprises a first electrode 37 and a second electrode 39. The use of two electrodes is for illustration only and multiple electrodes are used in practice. The texturing head 33 moves along the rotating roll 35 in direction M generally parallel to the surface of the workpiece so that the whole surface of the work roll 35 is treated. As illustrated in Figure 5a, at position A, both the first and second electrodes 37, 39 create sparks to texture the roll surface. As shown in Figure 5b, identical power pulses are delivered to both electrodes 37, 39. In use, at position B which is at the end of the work roll, the texturing head 33 stops. In response to approaching the end of the roll, a control device (not shown) reduces the power pulses delivered to the first electrode 37 and maintains the power pulses delivered to the second electrode 39. The power pulses to the second electrode 39 continue at maximum efficiency. Thus, the end of the roll which is textured by the second electrode 39 to a greater degree will have the same texturing pattern as the section of the work surface proximal the end of the roll which is textured by both electrodes 37, 39.

The above described embodiment has been given by way of example only, and the skilled reader will naturally appreciate that many variations could be made thereto without departing from the scope of the present invention as defined by the claims.

## Claims

1.  A control method for an electrical discharge apparatus which applies a machined or textured finish to the surface of an electrically conductive work piece, the apparatus comprising a head including a multiple electrode array (1) and moveable by a single servo motor towards and away from the work piece, each electrode receiving a plurality of applied voltage pulses from a pulse generator (3) and discharging these voltage pulses to the surface of the work piece, the control method being **characterised by** the steps of:

    (a) applying multiple voltage pulses to each of the electrodes of the array over a predetermined time period;
    (b) counting the number of voltage pulses applied to each electrode of the array during the predetermined time period;
    (c) counting the number of voltage pulses discharged from each electrode which voltage drops below a predetermined threshold voltage level during the time period;
    (d) calculating the proportion of discharged voltage pulses in which the voltage drops below the threshold voltage level and the number of applied voltage pulses to yield an efficiency measurement for each of the electrodes of the array;
    (e) outputting the efficiency measurement for each electrode of the array; and
    (f) using the efficiency measurement to adjust the voltage pulses applied to each of the electrodes of the array and to adjust the position of the servo motor.

2.  A control method as claimed in claim 1 **characterised in that** the efficiency measurement is utilised to control the position of the electrode array relative to the work piece.

3.  A control method for an electrical discharge apparatus according to claim1 or claim 2 **characterised in that** it further comprises the steps of comparing at least the highest electrode efficiency value with the mean efficiency value of the remaining electrodes of the array, and determining if the difference between the highest efficiency value/s and the mean efficiency value is greater than a predetermined threshold value.

4.  A control method according to claim 3 **characterised by** the step of comparing the two highest electrode efficiency values with the mean efficiency value of each electrode.

5.  A control method according to any preceding claim **characterised by** the step of adjusting the voltage pulses applied to each electrode comprises reducing the power applied for a set period of time.

6.  A control method according to any one of claims 1 to 3 wherein the step of adjusting the voltage pulses applied to each electrode comprises stopping the power applied for a set period of time.

7.  A control method according to any preceding claim wherein the step of adjusting the voltage pulses applied to each electrode comprises reducing the number of electrical pulses to each electrode.

8.  A control device for an electrical discharge apparatus wherein the electrical discharge apparatus is for applying a machined or textured finish to the surface of an electrically conductive work piece, and wherein the apparatus comprises a head including a multiple electrode array moveable by a single servo motor towards and away from the work piece, each of the electrodes in the array receiving a plurality of applied voltage pulses from a pulse generator (3) and discharging these voltage pulses to the surface of the work piece, the control device being **characterised by**:

(a) a monitoring means for monitoring voltage parameters output by each of the electrodes in the array comprising:

(b) a first counting means for counting the number of voltage pulses applied to each electrode over a predetermined time period;
(c) a second counting means for counting the number of voltage pulses applied to each electrode in which the voltage drops below a threshold voltage;
(d) a calculating means for calculating the proportion of voltage pulses applied to each electrode in which the voltage drops to below a predetermined threshold voltage to the number of voltage pulses applied to yield an electrode efficiency measurement for each of the electrodes in the array;
(e) an output for outputting an efficiency measurement for each electrode; and
(f) an adjusting means for adjusting the applied voltage pulses to each of the electrodes in the array according to the efficiency measurement output for each electrode of the array to compensate for irregularities occurring in the electrode array.

9. A control device according to claim 8 **characterised in that** the monitoring means further comprises a timing means for timing the pulse interval of each voltage pulse applied to the electrodes; a detecting means for detecting voltage greater than a predetermined threshold output from each electrode after the pulse interval; and wherein the adjusting means is also adapted to adjust the voltage pulses applied to each electrode in response to detection of voltage output after the pulse interval.

**Patentansprüche**

1. Steuerverfahren für eine Funkenerodiermaschine, die auf die Oberfläche eines elektrisch leitfähigen Werkstücks eine bearbeitete oder texturierte Oberflächenbehandlung aufträgt, wobei die Maschine einen Kopf umfasst, der eine Mehrfachelektrodenanordnung (1) aufweist und durch einen einzelnen Schrittmotor zu dem Werkstück hin und von diesem weg beweglich ist, wobei jede Elektrode mehrere zugeführte Spannungsimpulse von einem Impulsgenerator (3) empfängt und diese Spannungsimpulse auf die Oberfläche des Werkstücks entlädt, wobei das Steuerverfahren durch folgende Schritte gekennzeichnet ist:

(a) Zuführen mehrerer Spannungsimpulse an jede der Elektroden der Anordnung über einen vorbestimmten Zeitraum;
(b) Zählen der Anzahl der jeder Elektrode der Anordnung während dem vorbestimmten Zeitraum zugeführten Spannungsimpulse;
(c) Zählen der Anzahl der von jeder Elektrode entladenen Spannungsimpulse, deren Spannung während dem Zeitraum unter einen vorbestimmten Spannungsschwellenwert sinkt;
(d) Berechnen des Verhältnisses der entladenen Spannungsimpulse, bei denen die Spannung unter den Spannungsschwellenwert sinkt und der Anzahl der zugeführten Spannungsimpulse, um eine Effizienzmessung für jede der Elektroden der Anordnung zu ergeben;
(e) Ausgabe der Effizienzmessung für jede Elektrode der Anordnung; und
(f) Verwenden der Effizienzmessung zur Anpassung der jeder der Elektroden der Anordnung zugeführten Spannungsimpulse sowie zur Anpassung der Position des Schrittmotors.

2. Steuerverfahren nach Anspruch 1, **dadurch gekennzeichnet, dass** die Effizienzmessung zur Steuerung der Position der Elektrodenanordnung im Verhältnis zu dem Werkstück verwendet wird.

3. Steuerverfahren für eine Funkenerodiermaschine nach Anspruch 1 oder 2, **dadurch gekennzeichnet, dass** das Verfahren ferner die folgenden Schritte umfasst: Vergleichen wenigstens des höchsten Elektrodeneffizienzwertes mit dem mittleren Effizienzwert der restlichen Elektroden der Anordnung; und Bestimmen, ob die Differenz zwischen dem/den höchsten Effizienzwert(en) und dem mittleren Effizienzwert größer ist als ein vorbestimmter Schwellenwert.

**4.** Steuerverfahren nach Anspruch 3, **gekennzeichnet durch** den Schritt des Vergleichens der zwei höchsten Elektrodeneffizienzwerte mit dem mittleren Effizienzwert für jede Elektrode.

**5.** Steuerverfahren nach einem der vorstehenden Ansprüche, **dadurch gekennzeichnet, dass** der Schritt des Anpassens der jeder Elektrode zugeführten Spannungsimpulse das Reduzieren der zugeführten Leistung für einen festgelegten Zeitraum umfasst.

**6.** Steuerverfahren nach einem der Ansprüche 1 bis 3, wobei der Schritt des Anpassens der jeder Elektrode zugeführten Spannungsimpulse das Unterbrechen der zugeführten Leistung für einen festgelegten Zeitraum umfasst.

**7.** Steuerverfahren nach einem der vorstehenden Ansprüche, wobei der Schritt des Anpassens der jeder Elektrode zugeführten Spannungsimpulse das Reduzieren der Anzahl elektrischer Impulse an jede Elektrode umfasst.

**8.** Steuervorrichtung für eine Funkenerodiermaschine, wobei die Funkenerodiermaschine dazu dient, auf die Oberfläche eines elektrisch leitfähigen Werkstücks eine bearbeitete oder texturierte Oberflächenbehandlung aufzutragen, und wobei die Maschine einen Kopf umfasst, der eine Mehrfachelektrodenanordnung aufweist, die durch einen einzelnen Schrittmotor zu dem Werkstück hin und von diesem weg beweglich ist, wobei jede Elektrode der Anordnung mehrere zugeführte Spannungsimpulse von einem Impulsgenerator (3) empfängt und diese Spannungsimpulse auf die Oberfläche des Werkstücks entlädt, wobei die Steuervorrichtung **gekennzeichnet ist durch**:

(a) eine Überwachungseinrichtung zur Überwachung der Spannungsparameterausgabe **durch** jede der Elektroden der Anordnung; umfassend

(b) eine erste Zähleinrichtung zum Zählen der Anzahl der jeder Elektrode über einen vorbestimmten Zeitraum zugeführten Spannungsimpulse;

(c) eine zweite Zähleinrichtung zum Zählen der Anzahl der jeder Elektrode zugeführten Spannungsimpulse, deren Spannung unter einen vorbestimmten Spannungsschwellenwert sinkt;

(d) eine Recheneinrichtung zum Berechnen des Verhältnisses der jeder Elektrode zugeführten Spannungsimpulse, bei denen die Spannung unter einen vorbestimmten Spannungsschwellenwert sinkt, zu der Anzahl der zugeführten Spannungsimpulse, um eine Elektrodeneffizienzmessung für jede der Elektroden der Anordnung zu ergeben;

(e) einen Ausgang zur Ausgabe der Effizienzmessung für jede Elektrode; und

(f) eine Anpassungseinrichtung zum Anpassen der zugeführten Spannungsimpulse an jede der Elektroden der Anordnung gemäß der Effizienzmessungsausgabe für jede Elektrode der Anordnung, um in der Elektrodenanordnung auftretende Unregelmäßigkeiten zu kompensieren.

**9.** Steuervorrichtung nach Anspruch 8, **dadurch gekennzeichnet, dass** die Überwachungseinrichtung ferner eine Zeitsteuerungseinrichtung zur Zeitsteuerung des Impulsintervalls jedes den Elektroden zugeführten Spannungsimpulses umfasst; eine Erkennungseinrichtung zum Erkennen von Spannungen, die höher sind als eine vorbestimmte Schwellenwertausgabe jeder Elektrode nach dem Impulsintervall; und wobei die Anpassungseinrichtung ferner die Spannungsimpulse anpassen kann, die jeder Elektrode zugeführt werden als Reaktion auf die Erkennung einer Spannungsausgabe nach dem Impulsintervall.

## Revendications

**1.** Procédé de commande pour un appareil de décharge électrique qui applique un fini usiné ou texturé à la surface d'une pièce à travailler électroconductrice, l'appareil comprenant une tête ayant un réseau d'électrodes multiples (1) et pouvant être déplacée par un seul servomoteur vers et à l'opposé de la pièce à travailler, chaque électrode recevant une pluralité d'impulsions de tension appliquées d'un générateur d'impulsions (3) et déchargeant ces impulsions de tension à la surface de la pièce à travailler, le procédé de commande étant **caractérisé par** les étapes consistant à :

(a) appliquer de multiples impulsions de tension à chaque électrode du réseau sur une période de temps prédéfinie ;

(b) compter le nombre d'impulsions de tension appliquées à chaque électrode du réseau pendant la période de temps prédéfinie ;

(c) compter le nombre d'impulsions de tension déchargées provenant de chaque électrode dont la tension tombe en dessous d'un seuil de tension prédéfini pendant la période de temps ;

(d) calculer la proportion d'impulsions de tension déchargées dans lesquelles la tension tombe en dessous du seuil de tension et le nombre d'impulsions de tension appliquées pour obtenir une mesure d'efficacité pour chaque électrode du réseau ;

(e) transmettre la mesure d'efficacité pour chaque électrode du réseau ; et

(f) utiliser la mesure d'efficacité pour ajuster les impulsions de tension appliquées à chaque électrode du réseau et pour ajuster la position du servomoteur.

2. Procédé de commande selon la revendication 1, **caractérisé en ce que** la mesure d'efficacité est utilisée pour commander la position du réseau d'électrodes par rapport à la pièce à travailler.

3. Procédé de commande pour un appareil à décharge électrique selon la revendication 1 ou 2, **caractérisé en ce qu'**il comprend en outre les étapes consistant à comparer au moins la valeur d'efficacité d'électrode maximale à la valeur d'efficacité moyenne des électrodes restantes du réseau, et à déterminer si la différence entre la valeur d'efficacité maximale et la valeur d'efficacité moyenne est supérieure à une valeur de seuil prédéfinie.

4. Procédé de commande selon la revendication 3, **caractérisé par** l'étape consistant à comparer les deux valeurs d'efficacité d'électrode maximales à la valeur d'efficacité moyenne de chaque électrode.

5. Procédé de commande selon l'une quelconque des revendications précédentes, **caractérisé par** l'étape consistant à ajuster les impulsions de tension appliquées à chaque électrode, y compris à réduire la puissance appliquée pendant une période de temps définie.

6. Procédé de commande selon l'une quelconque des revendications 1 à 3, l'ajustement des impulsions de tension appliquées à chaque électrode comprenant l'étape consistant à arrêter la puissance appliquée pendant une période de temps définie.

7. Procédé de commande selon l'une quelconque des revendications précédentes, l'ajustement des impulsions de tension appliquées à chaque électrode comprenant l'étape consistant à réduire le nombre d'impulsions électriques à chaque électrode.

8. Dispositif de commande pour un appareil de décharge électrique, l'appareil de décharge électrique étant destiné à appliquer un fini usiné ou texturé à la surface d'une pièce à travailler électroconductrice, et l'appareil comprenant une tête ayant un réseau d'électrodes multiples pouvant être déplacée par un seul servomoteur vers et à l'opposé de la pièce à travailler, chaque électrode du réseau recevant une pluralité d'impulsions de tension appliquées d'un générateur d'impulsions (3) et déchargeant ces impulsions de tension à la surface de la pièce à travailler, le dispositif de commande étant **caractérisé par** :

(a) des moyens de surveillance pour surveiller les paramètres de tension transmis par chaque électrode dans le réseau comprenant :

(b) des premiers moyens de comptage pour compter le nombre d'impulsions de tension appliquées à chaque électrode sur une période de temps prédéfinie ;

(c) des seconds moyens de comptage pour compter le nombre d'impulsions de tension appliquées à chaque électrode dans laquelle la tension tombe en dessous d'une tension de seuil ;

(d) des moyens de calcul pour calculer la proportion d'impulsions de tension appliquées à chaque électrode dans laquelle la tension tombe en dessous d'une tension de seuil prédéfinie par rapport au nombre d'impulsions de tension appliquées pour obtenir une mesure de l'efficacité des électrodes pour chaque électrode du réseau ;

(e) une sortie pour transmettre une mesure d'efficacité pour chaque électrode ; et

(f) des moyens d'ajustement pour ajuster les impulsions de tension appliquées à chaque électrode du réseau en fonction de la mesure d'efficacité transmise pour chaque électrode du réseau afin de compenser les irrégularités survenant dans le réseau d'électrodes.

9. Dispositif de commande selon la revendication 8, **caractérisé en ce que** les moyens de surveillance comprennent en outre des moyens de synchronisation pour synchroniser l'intervalle d'impulsion de chaque impulsion de tension appliquée aux électrodes ; des moyens de détection pour détecter une tension supérieure à un seuil prédéfini transmise de chaque électrode après l'intervalle d'impulsion ; et les moyens d'ajustement étant également conçus pour ajuster les impulsions de tension appliquées à chaque électrode en réponse à la détection de la tension transmise après l'intervalle d'impulsion.

Pulse 1    Pulse 2

T

Fig. 1

Fig. 2

Example A

Example B

Example C

Fig. 3

13

18

4-a

15

4-b

A

17

B

C

Fig. 4

Fig. 5a

Fig. 5b

Fig. 5c

**EP 2 321 083 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0294082 A
- EP 0304235 A
- EP 0373154 A
- EP 0371962 A